# EUROPÄISCHE PATENTANMELDUNG

(11) **EP 0 704 247 A1**
(43) Veröffentlichungstag der Anmeldung: **03.04.1996**
(21) Anmeldenummer: 95114873.3
(22) Anmeldetag: 21.09.1995
(51) Int. Cl.: B03B 5/56, B03B 11/00

(54) **Vorrichtung zum Nassreinigen und zum Trennen von Gemischen aus Steinen, Sand, Erden und organischen Bestandteilen**

(30) Priorität: 28.09.1994 DE 4434650
(71) Anmelder: Ingenieurbüro Dipl.-Ing. Fritz Paris, D-38828 Harsleben (DE)
(72) Erfinder: Paris, Fritz, Dipl.-Ing., D-38828 Harsleben (DE)
(74) Vertreter: Leinung, Günter

(57) **Zusammenfassung**

Die erfindungsgemäße Lösung ist im Anschluß an einen Steinefänger im technologischen Prozeß der Aufbereitung und Verarbeitung von beispielsweise Rüben, einsetzbar und besteht aus einer waagerechten, auf einer Mittelwelle 2 drehbar gelagerten, an den Stirnseiten offenen kreiszylindrischen Trommel 1, deren Unterteil in einen dem Trommelaußendurchmesser angepassten Trog 3 eintaucht.

Die Trommel 1 setzt sich aus den Baugruppen Vorwaschtrommel 4, Trenntrommel 5 und Steinehubrad 6 zusammen.

Zwischen der Trenntrommel 5 und dem Steinehubrad 6 ist eine vertikale Trennwand 12 angordnet, welche spezielle Durchbrüche 13, Hubschaufeln 14 und Schlammwasserkanäle 16 aufweist.

Bei Rotation der Trommel 1 entstehen Zwangsströmungen, die eine Reinigung und Trennung der zugeführten Stoffe in die Komponenten Steine, Sand, in Wasser gelöste Erden und organische Bestandteile bewirken, indem diese Bestandteile durch die Vorwaschtrommel 4 und die Trennrrommel 5 geführt werden, der Austrag der Steine über das Steinehubrad 6 erfolgt und mittels der vorgesehenen Trennwand 12 eine Trennung sowie der Austrag von Wasser, Erden und organischen Bestandteilen geschieht.

## Beschreibung

Die Erfindung betrifft eine Vorrichtung zum Naßreinigen und zum Trennen von Gemischen aus Steinen, Sand, Erden und organischen Bestandteilen aus strömenden Gemischen, um sie einer Wiederverwendung zuzuführen.

Zur Abtrennung der schweren Beimengungen aus Steinen, Sanden, Erden und organischen Bestandteilen aus den Wassergemischen werden hauptsächlich Vorrichtungen eingesetzt, welche für den Trenneffekt die unterschiedlichen Sinkgeschwindigkeiten der Beimengungen nutzen. Dazu sind einfache Siebe bekannt, die teilweise mit einem durch Pumpen erzeugten Auftriebswasser arbeiten, wobei es auch Schächte mit Auftriebswasser in Schwemmrinnen oder Schwemmleitungen gibt, die ohne Siebe arbeiten.

Problematisch ist bei Vorrichtungen dieser Art der Austrag der abgesunkenen Bestandteile.

Zur kontinuierlichen Trennung von Sand, Steinen und Erden aus organischen Bestandteil-Wassergemischen haben sich spezielle Hubräder bewährt, die mit einer Siebtrommel zusammenarbeiten, wie sie in den Patentschriften DE 2840416 C 2 und DE 3119484 C 2 beschrieben werden.

Die DE 34 45 500 C 1 beschreibt eine Waschtrommel, mit der die Antriebsenergie gesenkt und der Fertigungsaufwand sowie die Strömungsverhältnisse in der Waschtrommel verbessert werden sollen. Die Senkung der Antriebsenergie, die auch einen wesentlichen Einfluß auf die Effektivität bei allen Steinefängern/Waschtrommeln dieser Bauart hat und der hohe Verschleiß der Antriebselemente, wird durch den Wegfall der Außenwendel erreicht.
Hierbei muß die Förderung des Sandes, der durch die Siebtrommel abgetrennt wird, zu den Ringkanälen mit der Strömungsgeschwindigkeit des Schwallwassers gesichert werden.

Dazu werden eine fertigungstechnisch schwierige Form des Troges und ein großer Außenumfang des Ringkanals benötigt. Besonders der große Außenumfang im Verhältnis zum Siebtrommeldurchmesser erfordert eine hohen Fertigungs-, Transport- und Bauaufwand, wobei letztendlich doch der Siebtrommeldurchmesser die entscheidende Größe für das durchzusetzende Schwemmwassergemisch ist.

Um auch die Durchsatzleistungen derartiger Vorrichtungen zu steigern, wurde gemäß der DD 265043 A 3 eine Vorrichtung geschaffen, bei der innerhalb einer waagerechten, auf einer Mittelwelle drehbar gelagerten, an beiden Stirnseiten offenen kreiszylindrischen Trommel, Schneckenwendeln angeordnet werden, zwischen welchen durch einen inneren radialen Boden aus Blech Ringkanäle ausgebildet werden, die entsprechend den Schneckenwendeln spiralförmig rechts- und linksgängig zu den Stirnseiten hin verlaufen.

Die ein- und austragsseitige Begrenzung der Trommel erfolgt durch Ringscheiben, die auch den äußeren Abschluß der Ringkanäle bilden.

Der Einbau der Trommel erfolgt in den Schwemmkanal, indem dieser eine dem Trommeldurchmesser entsprechende Erweiterung aus Blech oder Beton erhält, wobei am Zu- und Ablauf die Lagerung der Mittelwelle aufgenommen wird und die feststehende Abdichtung zur rotierenden Trommel angebracht wird. Die Rotationsbewegungen werden vorzugsweise durch formschlüssige Antriebselemente am Außenumfang der Trommel erzeugt.

In Zuckerfabriken und kartoffelverarbeitenden Betrieben wird die Abtrennung der nachzubehandelnden Stoffe mittels Steinefängern verschiedenster Bauweisen realisiert. Die anfallenden Gemische werden größtenteils deponiert oder in monderneren Fabriken mittels zusätzlicher Ausrüstungen, sogenannte Steinewaschtrommeln, gewaschen und getrennt.

Insbesondere nachteilig hat sich das Ablagern auf Deponien erwiesen, da von diesen sogenannten Deponien erhebliche Umweltbelastungen ausgehen, was sich in Luft-, Land- und Grundwasserbelastungen bzw.- verschmutzungen darstellt.

Nachteile der Trenntechnologien bestehen in dem hohen apparativen Aufwand, der entsprechende Kosten mit sich bringt.

Die Firma B & S stellt mit ihrem B&S Technologogik System V eine Steineaufbereitungstrommel vor, die bekannterweise aus einer Wasch- und Zerkleinerungssektion, einer Schlammabzugssektion und einer Trennsektion besteht.
Der Nachteil dieser Steineaufbereitungstrommel liegt in ihrem hohen Platz-, Energie-, Wasser- und Installationsaufwand.

Der Erfindung liegt die Aufgabe zugrunde, eine Vorrichtung zum Naßreinigen und zum Trennen von Gemischen aus Steinen, Sand, Erden und organischen Bestandteilen zu entwickeln, mit der die einzelnen Bestandteile gereinigt und getrennt ausgetragen werden können, um die Einzelkomponenten einer Wiederverwendung zuzuführen.

Erfindungsgemäß wird die Aufgabe durch die im Anspruch 1 herausgestellten Merkmale gelöst.

Vorteilhafte Ausgestaltungen der Erfindung sind Gegenstand der Unteransprüche.

Die erfindungsgemäße Lösung ist in einer Vorrichtung realisiert, die aus einer Trommel besteht, die auf einer Mittelwelle drehbar gelagert ist und deren Stirnseiten Öffnungen aufweisen. Der Unterteil der Trommel taucht in einen dem Trommelaußendurchmesser angepaßten Trog ein.

Innerhalb der Trommel befinden sich Schneckenwendeln, Rohrkanäle und Leitbleche, welche mit hubschaufelförmigen Konstruktionen zusammenwirken, sowie Rühr- und Reinigungselementen.
Mit diesen Einbauten ergeben sich im wesentlichen die technologischen Trommelabschnitte Vorwaschtrommel, Trenntrommel und Steinehubrad.

Für die Zu- und Abführung des zu reinigenden Gutes sind eine Zuführungs- und zwei Abführungsschurren vorgesehen.

Im Bereich zwischen Steinehubrad und Trenntrommel ist eine vertikale Trennwand angeordnet, deren Innenradius der Trommelwelle und deren Außenradius dem Zwischenbodenumfang entspricht.

Im Waschteil wird das Gemisch durch die Schneckenwendel zugeführt und weiter durch die zwischen Außenmantel und Mittelwelle angeordneten halbschalenförmigen Rührarme, die das Gut gleichmäßig umwälzen, dem Trennteil zugefördert.

In der vertikalen Trennwand befinden sich im Bereich der Schneckenwendel für den Stein- und Sandtransport Durchbrüche. Weiterhin sind waschtrommelseitig Kanäle angeordnet, die im Wellenbereich Durchbrüche in Richtung des Steinehubrades aufweisen und in radialer Richtung durch das Bodenblech hindurchgeführt werden und dort unmittelbar rechtwinklig in Drehrichtung der Trommel umgelenkt und weitergeführt werden.

Weiterhin ist auf der vertikalen Trennwand eine hubschaufelförmige Konstruktion aus teilweise perforierten Blechen angeordnet, deren Außendruchmesser geringer als der des Zwischenbodens ist und die sternförmig zur Mittelwelle verlaufen. Im Bereich der Mittelwelle befinden sich ebenfalls Durchbrüche in Richtung des Steinehubrades, die mit Umlenkblechen versehen sind. Die Bauweise ist so ausgeführt, daß diese Konstruktion gleichzeitig die Stabilität der Trennwand sichert.

Die erfindungsgemäße Vorrichtung wird unmittelbar dem im hydraulichen Förderstrom befindlichen Steinefänger nachgeordnet. Das aus dem Steinefänger ausgetragene Gemisch wird der erfindungsgemäßen Vorrichtung, der Steinewaschtrommel, über eine Schurre zugeführt.

Im Waschteil wird das Gemisch durch zwischen Außenmantel und Mittelwelle angeordnete Halbschalen umgewälzt und der Trenntrommel zugefördert.

Bei der Drehbewegung der Trommel werden nach dem bekannten Schwallwasserprinzip die Steine, der Sand und die Erdanteile so getrennt, daß die Steine dem Zwischenboden und die Sand- und Erdanteile innerhalb des Außenmantels dem Steinehubrad zugeführt werden. Die organischen Bestandteile werden je nach Größe in beiden Ebenen gefördert. Bei der Drehbewegung werden Steine in die Öffnungen der Austragetasche des Steinehubrades gefördert, der Sand gelangt durch die Ringkanäle ebenfalls dorthin.

Die mitströmenden organischen Bestandteile gelangen infolge der vertikalen Trennwand und der zwischen Steinehubrad und Trenntrommel entstehende Strömung durch die Öffnung in der vertikalen Trennwand immer wieder in die Trenntrommel zurück.

Dort werden sie durch die perforierten Hubschaufeln erfaßt und bei der Drehbewegung im Wellenbereich der vertikalen Trennwand in Richtung des Steinehubrades ausgetragen.

Über eine Schurre, die unterhalb der Welle durch die stirnseitige Wand der Wanne geführt wird, werden die organischen Bestandteile außerhalb der Vorrichtung abgelegt. Die außerdem an der vertikalen Trennwand angeordneten Kanäle schöpfen im Bereich der Ringkanäle, unterhalb des Zwischenbodens, das Wasser mit der höchsten Belastung an gelösten Erdstoffen und fördern es, ebenfalls durch die Drehbewegung, in Richtung der Mittelwelle. Dort gelangt es ebenfalls über die Schurre für die Abförderung der organischen Bestandteile direkt zurück in den Schwemmkanal.

Mit der Anordnung der vertikalen Trennwand wird erreicht, daß zwischen Steinehubrad und der Trenntrommel eine zusätzliche Strömung erzeugt wird, welche die organischen Beimengungen den Hubschaufeln zuführt und somit auf einfache Weise ihren Austrag ermöglicht und daß durch die Schlammwasserkanäle nur das am höchsten belastete Waschwasser ausgetragen wird, welches in gleicher Menge am Trommeleintritt wieder zugesetzt wird.

Mit nachfolgendem Ausführungsbeispiel soll die Erfindung näher erläutert werden.

Die dazugehörigen Zeichnungen zeigen in
Fig. 1 eine Schnittdarstellung der gesamten Vorrichtung, in
Fig. 2 eine Ansicht A-B nach Figur 1 und in
Fig. 3 eine Ansicht C-D nach Figur 1.

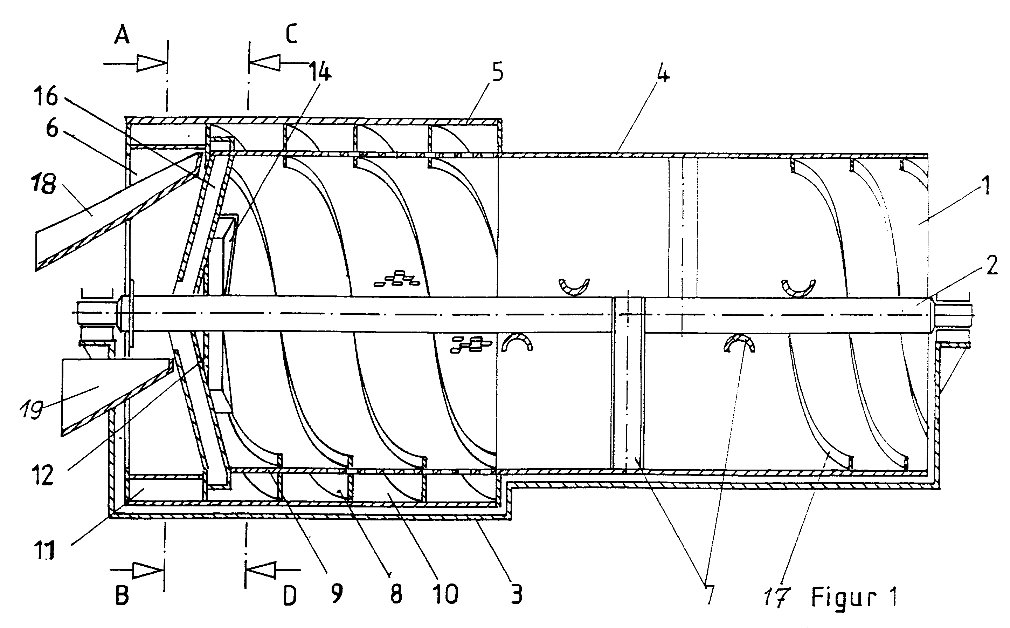

Der gesamte Aufbau der Vorrichtung wird in einer Schnittdarstellung in der Figur 1 verdeutlicht und ist gemäß den technologischen Bedingungen als eine auf einer Mittelwelle 2 gelagerten Trommel 1, die drehbar ausgeführt ist, ausgeführt und besteht aus den Baugruppen Vorwaschtrommel 4, Trenntrommel 5 und Steinehubrad 6, die, wiederum technologisch bedingt, von der Eintragsseite zur Austragsseite hintereinander geordnet sind.

In der Vorwaschtommel 4 sind umfangsseitig schneckenförmig verlaufende Schneckenwendeln 17 und Rührarme 7 angeordnet; die Rührarme sind dabei halbschalenförmig ausgebildet. Die Vorwaschtrommel 4, die Trenntrommel 5 und das Steinehubrad 6 befinden sich in einem dem Trommelaußendurchmesser angepaßten Trog 3.

In der Trenntrommel 5 sind an der inneren Wandung und an dieser fortlaufend die Schneckenwendel 8 angeordnet, die mit dem Zwischenboden 9 jeweils spiralförmige, teilweise perforierte Ringkanäle 10 bilden. Die Ringkanäle 10 enden an den Austragetaschen 11 des Steinehubrades 6. Zwischen der Trenntrommel 5 und dem Steinehubrad 6 ist eine ringscheibenförmige vertikale Trennwand 12 angeordnet, welche sich gleichfalls mit der Trommel 1 dreht.

An der Austragsseite sind, in die Trenntrommel 5 hineinragend, zwei Schurren vorgesehen, mit denen die gewaschenen Steine und Grobsand über die Schurre 18 und über die Schurre 19 die organischen Bestandteile, beispielsweise Rübenbruchstücke, sowie das Schmutzwasser aus der Vorrichtung ausgetragen werden.

Die vertikal in der Trenntrommel 5 angeordnete Trennwand 12 besitzt in ihrem Zentrum Öffnungen 15 und im Außenbereich Durchbrüche 13 sowie seitlich angeordnete Hubschaufeln 14 und Schlammwasserkanäle 16.

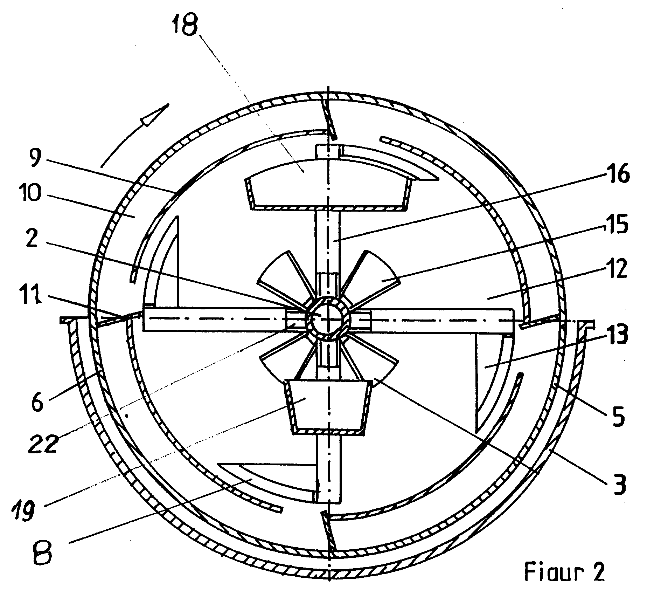

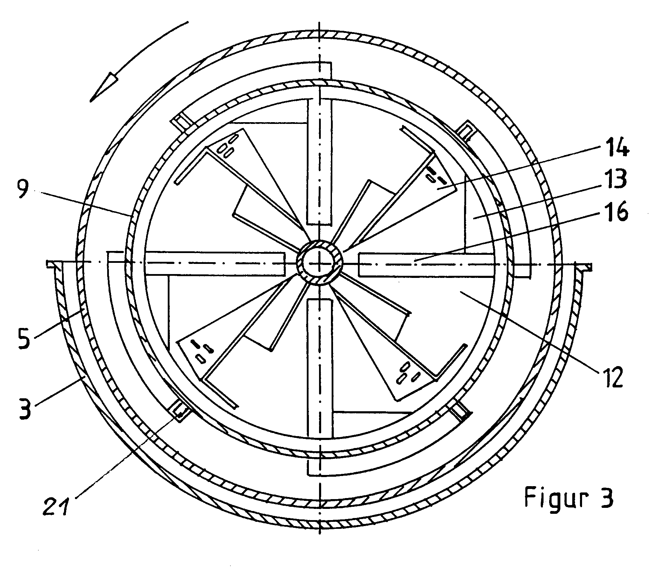

Dies wird in den Figuren 2 und 3 dargestellt.

Aus er Figur 2 ist gleichfalls die Anordnung der Schurren 18; 19 und die Ausbildung der Trennwand 12 auf der Austragsseite der gesamten Vorrichtung ersichtlich.

Die Durchbrüche 13 sind am Umfang der Trennwand 12 vorgesehen und vorzugsweise dreieckförmig ausgebildet.

Gleichfalls aus dieser Figur ist die Ausbildung der Trenntrommel 5 im Bereich der Übergabestelle von Trenntrommel 5 zum Steinehubrad 6 ersichtlich.

Die Ringkanäle 10 weisen in unmittelbarer Zuordnung zu den Durchbrüchen 13 in der Trennwand 12 Öffnungen auf und gleichfalls enden die Ringkanäle 10 in diesen Bereichen mit sogenannten Austragetaschen 11.

Auf der Eintragsseite der Trennwand 12, wie in Figur 3 dargestellt, sind sternförmig, und vorteilhafterweise um 90 Grad versetzt, Hubschaufeln 14 an der Trennwand 12 vorgesehen, die mit einem perforierten Bodenblech ausgerüstet und unmittelbar den Öffnungen 15 zugeordnet sind.

An der Trennwand 12 sind weiterhin L-förmig ausgebildete Schlammwasserkanäle 16 angeordnet, die unterhalb des Zwischenbodens 9 rechtwinklig im Radius des Zwischenbodens 9 umgelenkt und die jeweils mit einer Eintritts- und Austrittsöffnung 21; 22 enden. Die auf der Trennwand 12 angeordneten Schlammwasserkanäle 16 durchgreifen die Trennwand 12 im Bereich der Mittelwelle 2 und ihre Austrittsöffnungen 22 sind zur Mittelachse 2 und auf die darunter befindliche Schurre 19 gerichtet.

### Zum funktionellen Ablauf:

Das zu reinigende und zu trennende Gut, bestehend aus Steinen, Sanden, Erdteilen und Hackfruchtbruchteilen werden eingangsseitig in die Trommel 1 aufgegeben, in der ein Wasserbad vorhanden ist und in die ständig Wasser nachläuft. Dieses Gut wird mittels der Einbauten in der Vorwaschtrommel 4 durch diese transportiert. Im Bereich der Trenntrommel 5 erfolgt die Trennung der festen Bestandteile von den flüssigen. Die Steine und Bruchstücke werden durch die Trenntrommel 5 weitertransportiert und gelangen in den Bereich der Trennwand 12. Das mitgeführte Schlammwasser tritt über den perforierten Zwischenboden 9 in die geschlossenen Ringkanäle 10 und wird gleichfalls durch eine bei der Drehbewegung entstehenden Zwangsströmung in Richtung der Steineausstragsöffnung gefördert.

Das Austragen der Steine erfolgt in der Weise, daß die bei weiterer Drehbewegung der Trommel 1 die Steine über die Durchbrüche 13 in der Trennwand 12 auf die Austragsseite gebracht werden, dort im Bereich des Steinehubrades 6 mittels der Autragetaschen 11 mitgenommen, d.h. nach oben transportiert werden und dann infolge ihrer Masse auf die Schurre 18 fallen.

Über die Schurre 18 gelangen die Steine gereinigt und von Fremdteilen befreit, aus den Bereich der Trommel 1, und werden über nicht näher dargestellte Transportmittel abtransportiert.

Die mitgeführten Bruchstücke schwimmen infolge ihres spezifischen Gewichtes auf und werden durch das Schwallwasser am Austritt über die Durchbrüche 13 gehindert und verbleiben somit vor der Trennwand 12 auf
der Eintragsseite. Hier werden diese Bruchstücke mittels der Hubschaufeln 14 aufgenommen und aus dem Wasserbad heraustransportiert.

Das mitgeschöpfte Wasser tritt über die perforierten Böden der Hubschaufeln 14 zurück in das Wasserbad, verbleibt also im Trenntrommelbereich. Bei weiterer Drehbewegung gelangen die mit den Hubschaufeln 14 aufgenommenen Bruchstücke in den Bereich der Öffnungen 15, werden durch diese auf die andere Seite der Trennwand 12 verbracht, fallen auf die Schurre 19 und werden aus der Trommel 1 abgeführt.

Parallel zum Austrag der Steine und der Bruchstücke wird das Schlammwasser mit den Erdteilen und Sanden aus der Trommel 1 abgeführt.

Dies erfolgt über die Schlammwasserkanäle 16, die mit ihren radialen Teilen in die Ringkanäle 10 eintauchen und über ihre Eintrittsöffnungen 21 das Schlammwasser aufnehmen, in den Schlammwasserkanälen 16 mitführen und auf der Austragsseite, jenseits der Trennwand 12, tritt das Schlammwasser über die Austrittsöffnungen 22 aus diesen aus, fällt gleichfalls auf die Schurre 19 und gelangt somit aus der gesamten Vorrichtung.

Die vorgeschlagene Lösung ermöglicht, daß die zu trennenden Stoffe kontinuierlich von der Aufgabenseite, der Eingangsseite der Stoffe, zur Austragsseite gefördert werden und die einzelnen Stoffe, wie Steine, Hackfruchtbruchstücke, Sand und im Wasser gelöste Erdanteile, gereinigt und getrennt ausgetragen und somit einer direkten Wiederverwendung zugeführt werden können.

Durch die Anordnung der Trennwand 12 mit ihren Durchbrüchen 13 entsteht eine zusätzliche Strömung, die die organischen Bestandteile immer wieder in die Trommel 1 zurückführt und die dort, wie oben beschrieben, getrennt von Fremdstoffen ausgetragen werden.

## Patentansprüche

1. Vorrichtung zum Naßreinigen und zum Trennen von Gemischen aus Steinen, Sand, Erden und organischen Bestandteilen im wesentlichen bestehend aus einer waagerechten, auf einer Mittelwelle drehbar gelagerten, an beiden Stirnseiten offenen kreiszylinderischen Trommel, deren Unterteil sich in einem mit Flüssigkeit gefüllten Trog befindet und aus den Baugruppen Vorwaschtrommel, Trenntrommel und Steinehubrad besteht, dadurch gekennzeichnet, daß
zwischen der Trenntrommel (5) und dem Steinehubrad (6) eine mit der Trommel (1) mitdrehende vertikale Trennwand (12) vorgesehen ist, die zentrisch, sternförmig angeordnet und um 90 Crad versetzte Öffnungen (15) aufweist und in ihrem Außenbereich Durchbrüche (13) aufweist, wobei an der Trennwand (12) eintrittsseitig Hubschaufeln (14) und Schlammwasserkanäle (16) umfangsseitig und die Trennwand (12) durchdringend, angeordnet sind.

2. Vorrichtung, nach Anspruch 1, dadurch gekennzeichnet, daß
die Durchbrüche (13), austrittsseitig am Unfang der Trennwand (12) vorgesehen und mit der Schneckenwedel (8) in Wirkverbindung stehend, eine dreieckförmige Durchtrittsfläche besitzen.

3. Vorrichtung, nach den Ansprüchen 1 und 2, dadurch gekennzeichnet, daß
der Trennwand (12) austrittsseitig, im Bereich der Durchbrüche (13) eine Schurre (18) und im Bereich der Austrittsöffnungen (22) und der Durchbrüche (15) eine weitere Schurre (19) zugeordnet sind.

4. Vorrichtungen, nach den Ansprüchen 1 bis 3, dadurch gekennzeichnet, daß
die Hubschaufeln (14) mit perforierten Böden ausgebildet sind.

5. Vorrichtung, nach den Ansprüchen 1 bis 4, dadurch gekennzeichnet, daß
Austragetaschen (11), die, die aus den Durchbrüchen (13) austretenden Steine aufnehmen und zur Schurre (18) fördern, umfangsseitig am Steinehubrad (6) angeordnet sind.

6. Vorrichtungen nach den Ansprüchen 1 bis 4, dadurch gekennzeichnet, daß
die Schlammwasserkanäle (16) L-förmig an der Trennwand (12) dergestalt angeordnet sind, daß die Schenkel der Schlammwasserkanäle (16) am Umfang und in der Drehrichtung der Trennwand (12) angeordnet sind, wobei die Streben der Schlammwasserkanäle (16) die Trennwand (12) durchdringend, mit ihrer Austrittsöffnungen (22) auf die Mittelwelle (2) und der darunter vorgesehenen Schurre (19) gerichtet, austragsseitig an der Trennwand (12) befestigt sind.
